# EUROPEAN PATENT SPECIFICATION

(11) **EP 1 328 368 B1**
(45) Date of publication and mention of the grant of the patent: **29.03.2006**
(21) Application number: 01982939.9
(22) Date of filing: 18.10.2001
(51) Int. Cl.: B23D 51/10

(54) **FIXING FOR A SAW BLADE OF A JIGSAW**
STICHSÄGEBLATTSPANNVORRICHTUNG
FIXATION POUR LAME DE SCIE SAUTEUSE

(30) Priority: 18.10.2000 NL 1016427
(43) Date of publication of application: 23.07.2003
(73) Proprietor: SKIL EUROPE B.V., NL-4825 BD Breda (NL)
(72) Inventor: HOUBEN, Jan, Peter, B-2382 Poppel (BE); VAN DUN, Cornelis, Johannes, Maria, NL-4855 AW Galder (NL)
(74) Representative: Eveleens Maarse, Pieter
(86) International application number: PCT/NL2001/000769
(87) International publication number: WO 2002/032607

(56) References cited:
- EP-A- 0 072 282
- EP-A- 0 882 537
- PATENT ABSTRACTS OF JAPAN vol. 018, no. 009 (M-1538), 10 January 1994 (1994-01-10) -& JP 05 253738 A (RYOBI LTD), 5 October 1993 (1993-10-05)

## Description

The present invention relates to a fixing for a saw blade of a jigsaw, comprising a fixing element with a receiving cavity for receiving the end of the saw blade for fixedly clamping and clamping means which engage on the saw blade and which are situated between the saw blade and a wall of the receiving cavity running obliquely in the direction of the saw blade, and which means have a substantially circular cross-section.

Such a fixing is connected to the reciprocating drive rod of a jigsaw.

A fixing of the above stated type is known from EP 0 792 713 A2. The clamping means are formed herein by a pin which engages on an edge of the saw blade and which lies between the saw blade and the oblique side of the receiving cavity in order to receive the end of the saw blade. A self-clamping force is generated using such a construction. In order to release this clamping force and remove the saw blade from the fixing, a lever engaging on the pin is tilted counter to the bias of springs engaging on the pin. During tilting of the lever the pin is displaced along the obliquely running wall of the receiving cavity away from the saw blade. For release of the saw blade the sliding friction resulting from the clamping force must be overcome.

The object of the present invention is to provide a fixing of a saw blade for a jigsaw with an improved construction. For this purpose the fixing is characterized in that the clamping means consist of two pairs of clamping members with a substantially cylindrical cross-section which lie at a mutual distance and each of which is situated on either side of the saw blade. This ensures that the saw blade is also retained in the fixing element transversely of its wide sides. In addition, the one pair of clamping members can take over the clamping action of the other pair of clamping members when this latter is elastically deformed by tensile strain and pressure load on the saw blade. This is a self-clamping construction, i.e. the greater the force exerted on the saw blade during sawing, the greater the clamping force. An additional effect is that to release the saw blade the user only has to overcome a relatively small friction force resulting from rolling friction on either side. It is noted that a fixing for a saw of a fretsaw is known from JP 05-253738 (closest prior art). The fixing contains two rollers which co-act with a V-shaped groove to clamp the saw. The saw is clamped at both ends in such a fixing. The saw is placed with bias in the fretsaw and is only placed under strain of tension during sawing.

The clamping members preferably engage on the wide sides of the saw blade. In addition to the surface pressure on the saw blade being relatively low, use can be made of the standardized dimension in width direction of the wide sides of commercially available saw blades. The saw blade is retained in width direction in the receiving cavity, while the difference in thickness can be offset by the clamping member displaceable along the oblique wall of the receiving cavity.

In preference the clamping members of a pair are further situated at the same height relative to the fixing element so that the saw blade is not under strain of bending by the clamping members, and the chance of the saw blade breaking is minimized.

In a particularly advantageous embodiment according to the invention, the fixing element for receiving the or each pair of clamping members comprises a V-shaped groove which defines the oblique walls of the receiving cavity. Both clamping members are hereby clamped on both sides of the saw blade between a wall running obliquely to the saw blade and the saw blade, which results in a favourable symmetrical load on the saw blade.

Unlocking means are preferably further provided for removing the clamping means from the saw blade. In a preferred embodiment the unlocking means comprise an actuating element under bias which can be displaced relative to the fixing element for co-displacement of the clamping members.

The clamping members are preferably formed by pins.

The invention finally relates to a jigsaw provided with a fixing for a saw blade according to the present invention.

The invention will be further elucidated with reference to the annexed drawings. In the drawings:
Figure 1 shows a perspective view of a jigsaw provided with a fixing for a saw blade according to the present invention;
Figure 2 shows a detail view of a fixing according to a first embodiment of the invention;
Figure 3 shows a detail view of a fixing according to a second embodiment of the invention, and
Figure 4 shows a detail view of a fixing according to a third embodiment of the invention.

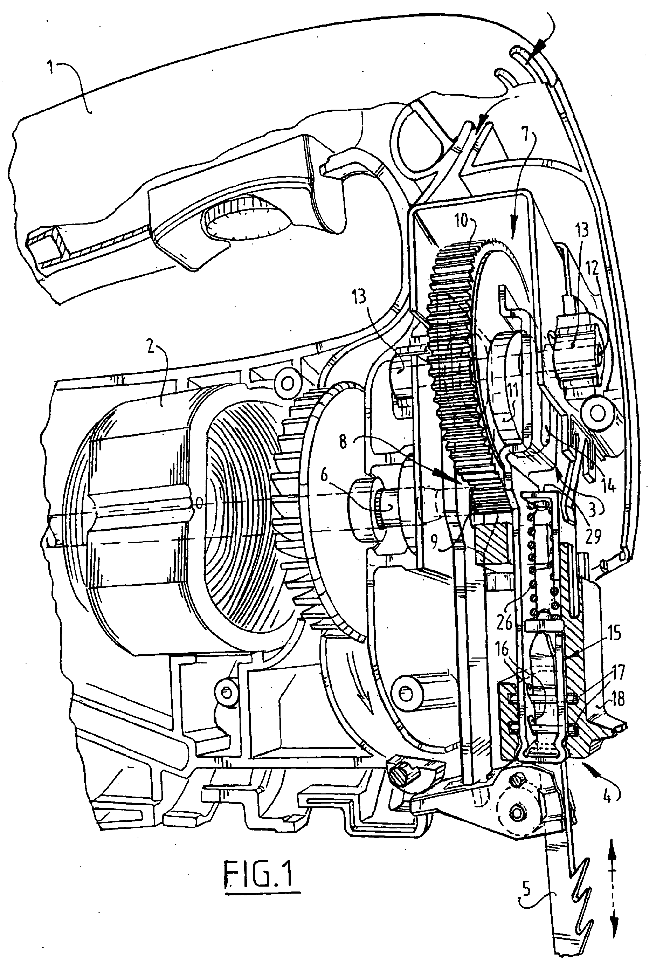

The jigsaw shown in figure 1 is provided with a housing 1, a part of which is broken away in the drawing to provide a view of the interior of the jigsaw. In housing 1 is arranged an electric motor 2 for driving a drive rod 3 which bears on its lower end a fixing 4 for a saw blade 5. Electric motor 2 is provided with a motor shaft 6. Between motor shaft 6 and drive rod 3 for saw blade 5 are arranged converting means 7 for converting the rotating movement of electric motor 2 into a reciprocating movement of saw blade 5. Converting means 7 comprise a gear transmission 8 consisting of a first gear wheel 9 connected to motor shaft 6 and a second gear wheel 10 co-acting therewith, and an eccentric 11 arranged on second gear wheel 10. Eccentric 11 co-acts with drive rod 3 to transmit the rotating movement of the second gear wheel 10 as a reciprocating movement of saw blade 5.

The second gear wheel 10 is supported rotatably in housing 1 by means of a gear shaft 12. Gear shaft 12 is rotatably mounted in bearings 13 on either side of second gear wheel 10. Gear shaft 12 herein extends through an opening 14 arranged in drive rod 3.

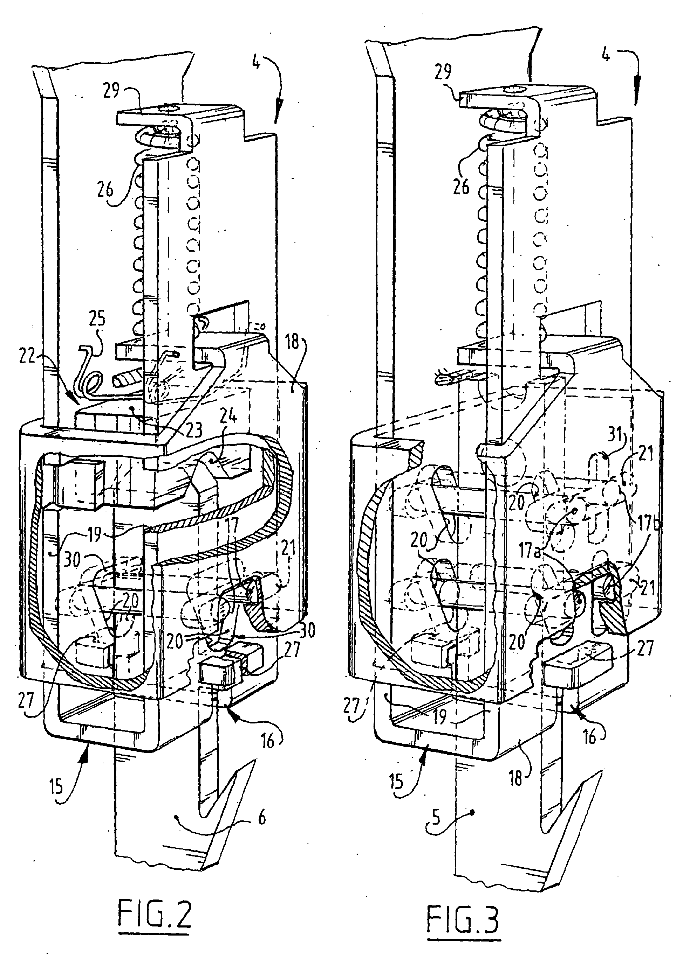

The fixing 4 for a saw blade 5 situated on the lower end of drive rod 3 comprises a fixing element 15 with a receiving cavity 16 for receiving the end of saw blade 5 for clamping, clamping means 17 engaging on saw blade 5 and an actuating element 18 with which clamping means 17 can be removed from saw blade 5. Actuating element 18 can slide relative to fixing element 15. The construction and operation of fixing 4 will be further elucidated with reference to different embodiments shown in Figures 2-4. Corresponding components in Figures 2-4 are designated with the same reference numerals.

In the first embodiment of fixing 4 as shown in Figure 2, clamping means 17 are formed by one pair of clamping members in the form of pins situated on either side of saw blade 5. Pins 17 have a cylindrical shape and engage on the wide sides of saw blade 5. The edges of saw blade 5, i.e. the short side of saw blade 5, are retained between walls 19 of fixing element 15. The receiving cavity 16 for receiving the end of saw blade 5 for clamping is located on the one hand between walls 19 and on the other between two walls 20 running obliquely toward saw blade 5. Receiving cavity 16 has a V-shaped cross-section, which is manifested in the V-shaped grooves 30 in each wall 19 of fixing element 15. Pins 17 extend on both sides through a V-shaped groove 30 in fixing element 15 into a longitudinal groove 21 of actuating element 18 extending transversely of the operating direction. The slidable actuating element 18 lies around fixing element 15 and serves to hold pins 17 transversely of saw blade 5 as well as for release thereof.

Fixing 4 is further provided with retaining means 22 for retaining saw blade 5 in a direction transversely of the wide sides thereof. In the embodiment according to Figure 2, these retaining means 22 are formed by a retaining element 23 with a V-shaped recess 24 for receiving the outer end 27 of saw blade 5. In addition, saw blade 5, which is commercially available with different thicknesses, is centered in the V-shaped recess 24. By means of a spring 25 arranged in fixing element 15 the retaining element 23 is pushed into contact with the outer end of saw blade 5.

A compression spring 26 is further arranged between actuating element 18 and fixing element 15. This compression spring 26 ensures that pins 17 in V-shaped groove 30 of fixing element 15 are pushed to saw blade 5 via actuating element 18. The bias generated by spring 26 must be so great that the forces of inertia during sawing are overcome in order to hold pins 17 against saw blade 5. Saw blade 5 is loaded by a downward directed force during sawing. Pins 17 will hereby move further in the V-shaped groove 30 toward saw blade 5 and therein clamp saw blade 5 with a greater clamping force in fixing element 15. For release of saw blade 5 the actuating element 18 must be displaced upward relative to fixing element 15 counter to the spring force of compression spring 26. Because the pins 17 lying on either side of saw blade 5 have a circular cross-section, only a rolling friction resulting from the clamping force need be overcome. Rolling friction is equivalent to a low coefficient of friction wherein low friction forces are the result of normal forces, or in the present case clamping forces.

In order to be able to clamp saw blades of both the "T-shank" type and the "U-shank" type in the fixing 4, which types of saw blades otherwise have practically the same standardized width, two recesses 27 for the protrusions of the "T-shank" type of saw blade are arranged in walls 19 of fixing element 15.

Figure 3 shows a second embodiment of fixing 4 according to the present invention. The difference of this embodiment from the first embodiment is that two pairs of pins 17a,17b are provided at a distance from each other. The pins 17a,17b of each pair lie on either side of saw blade 5. The one pin 17a of each pair of clamping members 17a,17b is herein arranged between saw blade 5 and the wall 20 of receiving cavity 16 running obliquely to the saw blade, while the other pin 17b of each pair of clamping members 17a,17b is arranged rotatably but not displaceably in fixing element 15. The longitudinal grooves 21 in actuating element 18 and transverse grooves 31 in fixing element 15 co-act for this purpose. In this embodiment the above stated retaining means 22 are formed by the pairs of clamping members 17a,17b placed at a mutual distance. A retention transversely of the wide sides of saw blade 5 is hereby ensured.

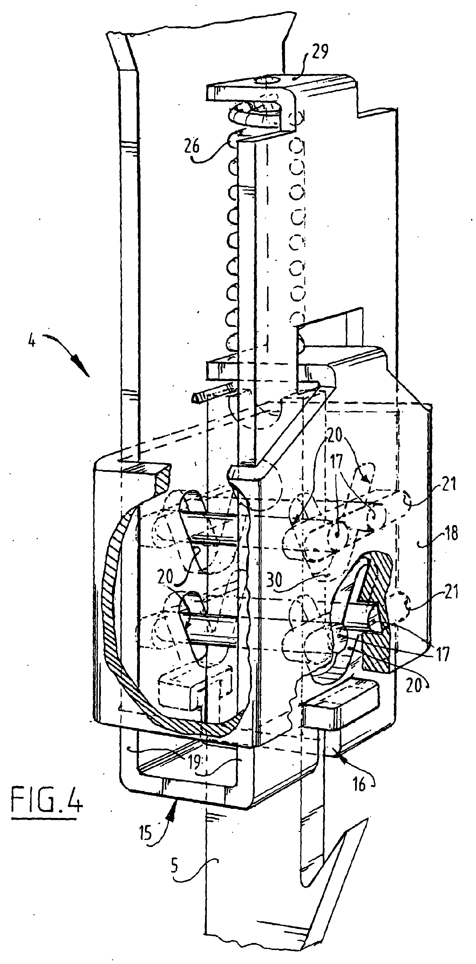

In the final embodiment of fixing 4 according to the invention shown in Figure 4, the difference from the embodiment shown in Figure 3 is that each pair of clamping members 17 lie in a V-shaped groove 30 of fixing 4 and that each pin 17 therefore co-acts with an inclining wall 20 of receiving cavity 16. A symmetrical load on saw blade 5 is herein obtained. The one pair of clamping members 17 takes over the function of the other pair of clamping members 17 when this latter deforms elastically due to load on saw blade 5. In the third embodiment is further ensured that the middle of the saw blade comes to lie on the same sawing line. Conversely, in the embodiment of Figure 3 one of the two wide sides of the saw blade forms the reference plane. Finally, no additional means 22 are required relative to the embodiment of Figure 2 for retaining saw blade 5 in fixing element 15 transversely of the wide sides, now that tilting in this direction is prevented by the pairs of pins 17 placed at a mutual distance. Centring of saw blades 5, which can have a relatively differing thickness, is carried out with this embodiment.

It is further noted that in the shown embodiment the fixing element 15 is formed together with drive rod 3 from one piece of plate material which is given the desired form by folding. On the upper side the plate part is provided with a cavity 28 (Figure 1) for receiving the eccentric 11. The opening 14 for passage of gear shaft 12 is situated in cavity 28. On the underside the plate part is bent to form fixing element 15. The plate part then extends further upward and is bent once again to form a stop 29 for compression spring 26.

The clamping members shown in the figures have a circular cross-section. According to the invention however, any clamping member with a substantially circular cross-section, for instance elliptically shaped cross-section, can be applied as long as the clamping member can roll along a certain distance of its periphery.

It must be noted that it is in principle possible to have an embodiment wherein a pair of clamping members are not located at the same height, this in contrast to the shown embodiments. Such a construction does however have the drawback that the saw blade is under strain of bending by the clamping members. The chance of the saw blade breaking is not inconsiderable here.

## Claims

1. Fixing (4) for a saw blade (5) of a jigsaw, comprising a fixing element (15) with a receiving cavity (16) for receiving the end of the saw blade (5) for fixedly clamping and clamping means (17) which engage on the saw blade (5) and which are situated between the saw blade (5) and a wall (20) of the receiving cavity (16) running obliquely in the direction of the saw blade, and which means have a substantially circular cross-section, **characterized in that** the clamping means (17) consist of two pairs of clamping members with a substantially cylindrical cross-section which lie at a mutual distance and each of which is situated on either side of the saw blade (5).

2. Fixing as claimed in claim 1, wherein the clamping members engage on the wide sides of the saw blade.

3. Fixing as claimed in claim 1 or 2, wherein the clamping members of a pair are situated at the same height relative to the fixing element.

4. Fixing as claimed in any of the claims 1-3, wherein the fixing element for receiving the or each pair of clamping members comprises a V-shaped groove which defines the oblique walls of the receiving cavity.

5. Fixing as claimed in any of the claims 1-4, wherein unlocking means are provided for removing the clamping means from the saw blade.

6. Fixing as claimed in any of the claims 1-5, wherein the unlocking means comprise an actuating element under bias which can be displaced relative to the fixing element for co-displacement of the clamping members.

7. Fixing as claimed in any of the claims 1-6, wherein the clamping members are formed by pins.

8. Jigsaw comprising a housing, an electric motor accommodated therein for driving a drive rod which bears on its lower end a fixing for a saw blade, and converting means for converting a rotating movement of the motor into a reciprocating movement of the drive rod, wherein the fixing comprises a fixing element with a receiving cavity for receiving the end of the saw blade for clamping and clamping means which engage on the saw blade and which are situated between the saw blade and a wall of the receiving cavity running obliquely in the direction of the saw blade, and which means have a substantially circular cross-section, **characterized in that** the clamping means consist of two pairs of clamping members with a substantially cylindrical cross-section which lie at a mutual distance and each of which is situated on either side of the saw blade.

9. Jigsaw as claimed in claim 8, wherein the drive rod is manufactured from thin-walled plate material.

10. Jigsaw as claimed in claim 9, wherein the fixing and the drive rod are manufactured substantially from one piece of plate material.

## Patentansprüche

1. Spannvorrichtung (4) für ein Sägeblatt (5) einer Stichsäge umfassend ein Befestigungselement (15) mit einer aufnehmenden Aussparung (16) zum Aufnehmen des Endes des Sägeblattes (5) zum festen Einspannen, und Klemmmittel (17), die am Sägeblatt (5) eingreifen und sich zwischen dem Sägeblatt (5) und einer schräg in Richtung des Sägeblattes verlaufenden aufnehmenden Aussparung (16) befinden, wobei die Mittel einen im wesentlichen kreisförmigen Querschnitt aufweisen, **dadurch gekennzeichnet, dass** die Klemmmittel (17) aus zwei Paaren Klemmelementen mit einem im wesentlichen zylindrischen Querschnitt bestehen, die in einem wechselseitigen Abstand zueinander liegen und von denen sich jedes auf einer Seite des Sägeblattes (5) befindet.

2. Spannvorrichtung gemäß Anspruch 1, wobei die Klemmelemente an den breiten Seiten des Sägeblattes (5) eingreifen.

3. Spannvorrichtung gemäß Anspruch 1 oder 2 , wobei die Klemmelemente eines Paares sich im Verhältnis zum Befestigungselement auf gleicher Höhe befinden.

4. Spannvorrichtung gemäß einem der Ansprüche 1-3, wobei das Befestigungselement zum Aufnehmen der oder eines jeden Paar von Klemmelementen eine V-förmige Nut umfasst, welche die schrägen Wände (20) der aufnehmenden Aussparung bestimmt.

5. Spannvorrichtung gemäß einem der Ansprüche 1-4, wobei Entriegelungsmittel zum Entfernen der Klemmmittel vom Sägeblatt vorgesehen sind.

6. Spannvorrichtung gemäß einem der Ansprüche 1-5, wobei die Entriegelungsmittel ein Betätigungselement unter Spannung umfassen, das im Verhältnis zum Befestigungselement versetzt werden kann, um die Klemmelemente mit zu versetzen.

7. Spannvorrichtung gemäß der Ansprüche 1-6, wobei die Klemmelemente aus Stiften bestehen.

8. Stichsäge umfassend ein Gehäuse, einen darin untergebrachten elektrischen Motor zum Antreiben einer Pleuelstange, die an ihrem unteren Ende eine Spannvorrichtung für ein Sägeblatt umfasst, und Umwandlungsmittel zum Umwandeln einer Rotationsbewegung des Motors in eine Hubbewegung der Pleuelstange, wobei die Spannvorrichtung ein Befestigungselement mit einer aufnehmenden Aussparung zum Aufnehmen des Endes des Sägeblattes zum Einspannen und Klemmmittel umfasst, die am Sägeblatt eingreifen und die sich zwischen dem Sägeblatt und einer schräg in Richtung des Sägeblattes verlaufenden Wand der aufnehmenden Aussparung (16) befinden, **dadurch gekennzeichnet, dass** die Mittel einen im wesentlichen kreisförmigen Querschnitt aufweisen, **dadurch gekennzeichnet, dass** die Klemmmittel aus zwei Paaren Klemmelementen mit einem im wesentlichen zylindrischen Querschnitt bestehen, die in einem wechselseitigen Abstand zueinander liegen und von denen jedes sich auf einer Seite des Sägeblattes (5) befindet.

9. Stichsäge gemäß Anspruch 8, wobei die Pleuelstange aus einem dünnwandigen plattenförmigem Material hergestellt ist.

10. Stichsäge gemäß Anspruch 9 wobei die Spannvorrichtung und die Pleuelstange im wesentlichen aus einem plattenförmigem Material hergestellt sind.

## Revendications

1. Fixation (4) pour lame (5) de scie sauteuse, comprenant un élément de fixation (15) avec une cavité de réception (16) pour recevoir l'extrémité de la lame de scie (5) pour serrer de manière fixe et des moyens de serrage (17) qui se mettent en prise sur la lame de scie (5) et qui sont situés entre la lame de scie (5) et une paroi (20) de la cavité de réception (16) s'étendant de manière oblique dans la direction de la lame de scie, et lesquels moyens ont une section transversale sensiblement circulaire, **caractérisée en ce que** les moyens de serrage (17) se composent de deux paires d'éléments de serrage avec une section transversale sensiblement cylindrique qui se trouvent à distance l'une de l'autre et dont chacune est située de chaque côté de la lame de scie (5).

2. Fixation selon la revendication 1, dans laquelle les éléments de serrage se mettent en prise sur les côtés larges de la lame de scie.

3. Fixation selon la revendication 1 ou 2, dans laquelle les éléments de serrage d'une paire sont situés à la même hauteur par rapport à l'élément de fixation.

4. Fixation selon l'une quelconque des revendications 1 à 3, dans laquelle l'élément de fixation pour recevoir la ou chaque paire d'éléments de serrage comprend une rainure en forme de V qui définit les parois obliques de la cavité de réception.

5. Fixation selon l'une quelconque des revendications 1 à 4, dans laquelle on prévoit des moyens de déblocage pour retirer les moyens de serrage de la lame de scie.

6. Fixation selon l'une quelconque des revendications 1 à 5, dans laquelle les moyens de déblocage comprennent un élément d'actionnement sous pression qui peut être déplacé par rapport à l'élément de fixation pour le déplacement conjoint des éléments de serrage.

7. Fixation selon l'une quelconque des revendications 1 à 6, dans laquelle les éléments de serrage sont formés par des broches.

8. Scie sauteuse comprenant un boîtier, un moteur électrique logé à l'intérieur pour entraîner une tige d'entraînement qui supporte sur son extrémité inférieure une fixation destinée à une lame de scie, et des moyens de conversion pour convertir un mouvement rotatif du moteur en un mouvement de va et vient de la tige d'entraînement, dans laquelle la fixation comprend un élément de fixation avec une cavité de réception pour recevoir l'extrémité de la lame de scie pour serrer et des moyens de serrage qui se mettent en prise sur la lame de scie et qui sont situés entre la lame de scie et une paroi de la cavité de réception s'étendant de manière oblique dans la direction de la lame de scie, et lesquels moyens ont une section transversale sensiblement circulaire, **caractérisée en ce que** les moyens de serrage se composent de deux paires d'éléments de serrage avec une section transversale sensiblement cylindrique qui se trouvent à distance l'une de l'autre et dont chacune est située de chaque côté de la lame de scie.

9. Scie sauteuse selon la revendication 8, dans laquelle la tige d'entraînement est fabriquée à partir d'un matériau plat à fine paroi.

10. Scie sauteuse selon la revendication 9, dans laquelle la fixation et la tige d'entraînement sont fabriquées sensiblement à partir d'une seule pièce de matériau plat.
